(19) Europäisches Patentamt
European Patent Office
Office européen des brevets

(11) **EP 1 264 746 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(51) Int Cl.:
*B60S 1/08* (2006.01)      *G01N 27/02* (2006.01)
*F27D 19/00* (2006.01)

(21) Anmeldenummer: **02011864.2**

(22) Anmeldetag: **28.05.2002**

(54) **Vorrichtung zur Befeuchtungserkennung**

Device for humidity detection

Dispositif de détection d'humidité

(84) Benannte Vertragsstaaten:
**DE FR GB IT**

(30) Priorität: **08.06.2001 DE 10127990**

(43) Veröffentlichungstag der Anmeldung:
**11.12.2002 Patentblatt 2002/50**

(73) Patentinhaber: **VOGT electronic AG**
**94130 Obernzell (DE)**

(72) Erfinder: **Wimmer, Willi**
**94051 Hauzenberg (DE)**

(74) Vertreter: **Grünecker, Kinkeldey,**
**Stockmair & Schwanhäusser**
**Anwaltssozietät**
**Maximilianstrasse 58**
**80538 München (DE)**

(56) Entgegenhaltungen:
**DE-A- 3 220 123         DE-A- 3 437 950**
**US-A- 3 906 340         US-A- 4 703 237**
**US-A- 5 682 788**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 264 746 B1

**Beschreibung**

Die Erfindung betrifft Vorrichtungen zur Befeuchtungserkennung nach den Oberbegriffen der Ansprüche 1 und 2.

Eine Vorrichtung zur Befeuchtungserkennung nach dem Oberbegriff des Anspruchs 1 ist aus der US 4 703 237 bekannt.

Mit Hilfe einer solchen Vorrichtung beziehungsweise eines solchen Sensorsystems kann zum Beispiel der Scheibenwischer eines Fahrzeugs abhängig von der Regenmenge gesteuert werden.

Eine aus der DE 44 26 736 A1 bekannte Vorrichtung zur Befeuchtungserkennung sowie weitere aus dem Stand der Technik bekannte entsprechende optische, resistive und kapazitive Sensorsysteme zur Befeuchtungserkennung haben alle den Nachteil, dass sie aufwendig mit der Windschutzscheibe eines Fahrzeugs verbunden werden müssen. Der Aufwand an elektronischen Bauelementen beim Messaufnehmer ist relativ groß, was insbesondere bei der Verbauung an Windschutzscheiben von Kraftfahrzeugen eine Beeinträchtigung darstellt. Bei optischen Sensorsystemen kommt hinzu, dass diese sehr empfindlich auf Verschmutzungen reagieren und daher das Ausgangssignal der Mess- und Auswerteschaltung häufig nicht mehr als Maß des Befeuchtungsgrades des Messaufnehmers angesehen werden kann.

Die US 5 682 788 zeigt einen differentiellen kapazitiven Feuchtesensor, bei dem ein Trockenreferenzsignal zusätzlich zum Meßsignal erhalten wird.

Der Erfindung liegt die Aufgabe zugrunde, eine Vorrichtung zur Befeuchtungserkennung bereitzustellen, die größere Freiheitsgrade bei der Unterbringung des Messaufnehmers gestattet, bei welcher der Messaufnehmer möglichst wenige elektronische Bauelemente aufweist und bei welcher die Mess- und Auswerteelektronik weitgehend unabhängig vom Messaufnehmer verbaut werden kann. Außerdem soll eine Verwendung einer solchen Vorrichtung zur Befeuchtungserkennung in einem Regensensor eines Kraftfahrzeugs angegeben werden.

Erfindungsgemäß wird diese Aufgabe gelöst durch eine Vorrichtung zur Befeuchtungserkennung nach Anspruch 1, eine Vorrichtung zur Befeuchtungserkennung nach Anspruch 2 und eine Verwendung einer Vorrichtung zur Befeuchtungserkennung nach Anspruch 15.

Vorteilhafte und bevorzugte Ausführungsformen der Vorrichtung zur Befeuchtungserkennung sind Gegenstand der Unteransprüche.

Nachfolgend werden Ausführungsbeispiele der Erfindung anhand von Figuren erläutert. Es zeigt.

    Fig.1 ein Prinzipschaltbild eines Ausführungsbeispiels eines Teils einer erfindungsgemäßen Vorrichtung zur Befeuchtungserkennung,

    Fig. 2 einen prinzipiellen Frequenzgang der Ausgangsspannung der Schaltung von Figur 1,

    Fig. 3 verschiedene Ausführungsbeispiele eines Messaufnehmers zur Verwendung in einer erfindungsgemäßen Vorrichtung zur Befeuchtungserkennung und

    Fig. 4 schematisch eine Anordnung einzelner Teile eines Ausführungsbeispiels einer erfindungsgemäßen Vorrichtung zur Befeuchtungserkennung in einem Kraftfahrzeug.

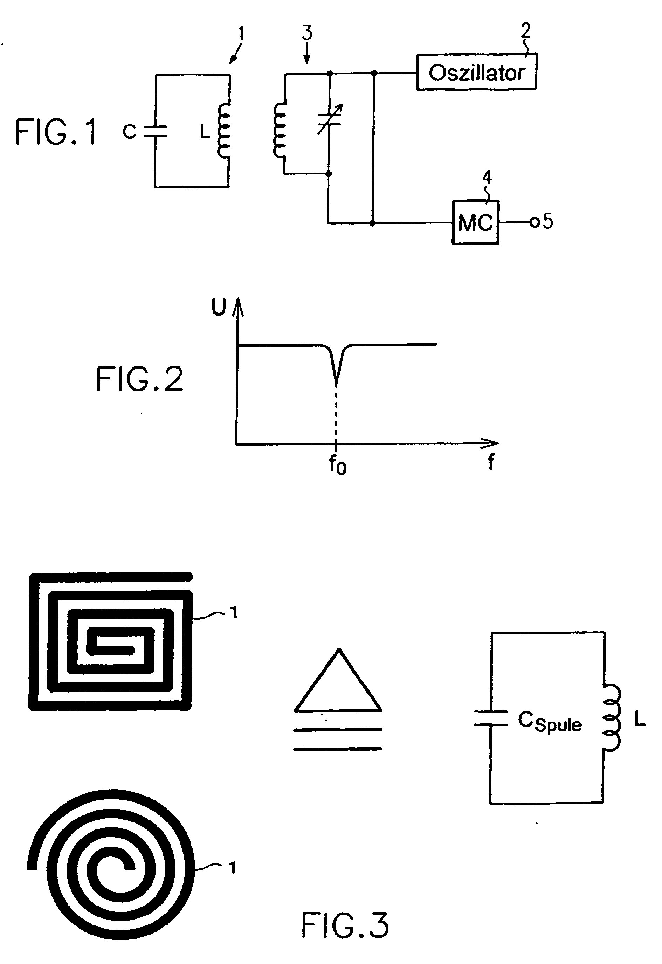

Das in Fig. 1 dargestellte Prinzipschaltbild trifft einen Teil eines Ausführungsbeispiels einer erfindungsgemäßen Vorrichtung zur Befeuchtungserkennung .

Die Schaltung weist einen LC-Schwingkreis 1 als Messaufnehmer sowie einen Oszillator 2 zur Anregung des Schwingkreises 1 auf. Ferner sind eine Durchstimmeinrichtung 3 zur frequenzmäßigen Durchstimmung des Oszillators 2 und eine Mess- und Auswerteschaltung 4 vorhanden. Die Mess- und Auswerteschaltung 4 dient zur Erfassung des Bedämpfungszustandes des Oszillators 2 und zum Bereitstellen eines Signals, das proportional zum Befeuchtungsgrad des Messaufnehmers 1 ist. Das genannte Signal wird am Ausgang 5 der Schaltung bereitgestellt.

Bei dem in Fig. 1 dargestellten Ausführungsbeispiel sind der Messaufnehmer 1 und der Oszillator 2 berührungslos energetisch gekoppelt. Bei anderen Ausführungsbeispielen erfindungsgemäßer Vorrichtungen zur Befeuchtungserkennung kann die Kopplung zwischen dem Messaufnehmer 1 und dem Oszillator 2 auch auf galvanischem Wege erfolgen, wobei dann wichtig ist, dass der Messaufnehmer 1 nur aus einem Leiter besteht, so wie es weiter unten mit Bezug auf die Fig. 3 näher erläutert wird.

Die Durchstimmeinrichtung 3 kann manuell, jedoch vorzugsweise automatisch betrieben werden. Sie sorgt für die frequenzmäßige Durchstimmung des Oszillators 2. Wenn die aktuelle Oszillatorfrequenz mit der Resonanzfrequenz $f_0$ des Messaufnehmers 1 übereinstimmt, ist die Bedämpfung des Oszillators 2 deutlich höher als bei Nichtübereinstimmung der beiden letztgenannten Frequenzen. Die starke Bedämpfung im Resonanzfall führt zu einer deutlichen Verringerung der am Ausgang 5 der Schaltung bereitgestellten Spannung U, so wie es in Fig. 2 zu sehen ist.

Beide Komponenten des LC-Schwingkreises 1 sind feuchteempfindlich. Befindet sich im Feldverlauf des Schwingkreises 1 leitfähiges Material, so werden darin Wirbelströme erzeugt. Diese Wirbelströme erzeugen vor allem bei höheren Frequenzen eine Rückwirkung in der Induktivität L, wodurch durch die Gegeninduktion die Impedanz des Schwingkreises 1 geändert wird. So verringert sich etwa durch die nichtmagnetischen Eigenschaften der Feuchte die Induktivität, was eine Frequenzerhöhung zur Folge hat, wie es aus der hierzu gültigen Gleichung (1) hervorgeht:

$$f_{0=} \frac{1}{2 * \sqrt{L * C}} \quad (1)$$

Ähnliches geschieht mit der Kapazität. Kommt ein Material mit einer hohen Dielektrizitätszahl (zum Beispiel Wasser $\varepsilon_r$ =80) in die Nähe des Schwingkreises 1, so wird die Kapazität C erhöht. Dies wirkt sich durch eine Frequenzverringerung aus, wie der hierzu gültigen Gleichung (2) entnommen werden kann:

$$C = \varepsilon_0 . \varepsilon_r . \frac{A}{d} \quad (2),$$

wobei $\varepsilon_0$ und $\varepsilon_r$ die absolute und die relative Dielektrizitätskonstante, A die Kondensatorfläche und d der Abstand zwischen den Kondensatorteilen sind.

Die Induktivitätsverkleinerung ist aber im Vergleich zur Kapazitätserhöhung vernachlässigbar, so dass insgesamt die Resonanzfrequenz des als Messaufnehmer dienenden LC-Schwingkreises 1 durch den Feuchteeinfluß verringert wird. Diese Abhängigkeit wird bei allen erfindungsgemäßen Vorrichtungen zur Befeuchtungserkennung ausgenutzt.

Bei jedem der genannten Ausführungsbeispiele steht somit die Resonanzfrequenz $f_0$ des Schwingkreises 1 und damit die am Ausgang 5 der in Fig. 1 dargestellten Prinzipschaltung bereitgestellte Spannung U in ihrem Frequenzgang in Abhängigkeit zu der vom Messaufnehmer zu detektierenden äußeren Größe, nämlich zur Größe der Befeuchtung .

In anderen Ausführungsbeispielen der erfindungsgemäßen Vorrichtungen zur Befeuchtungserkennung wird am Ausgang 5 der dargestellten Schaltung nicht der in Fig. 2 gezeigte Frequenzgang der Spannung U bereitgestellt, sondern ein von der Mess- und Auswerteschaltung 4 noch weiter aufbereitetes Signal, das proportional zum Befeuchtungsgrad des Messaufnehmers 1ist. Dieses Signal kann dann wiederum zur Steuerung anderer Vorrichtungen, wie zum Beispiel Scheibenwischern, Pumpen, Ventilen oder Anzeigeeinrichtungen dienen.

In Fig. 3 sind Ausführungsbeispiele von Messaufnehmern für bestimmte erfindungsgemäße Vorrichtungen zur Befeuchtungserkennung dargestellt, wobei das besondere dieser Messaufnehmer ist, dass sie jeweils nur aus einem Leiter bestehen. Auf der rechten Seite von Fig. 3 ist das jeweils entsprechende Ersatzschaltbild zu sehen, das wieder genau so ein passiver LC-Schwingkreis ist, wie er schon in Fig. 1 gezeigt worden war. Die Besonderheit besteht darin, dass die Eigenkapazität der Leiteranordnung zur Realisierung der Kapazität C des LC-Schwingkreises genutzt wird. Um eine möglichst große Änderung der Frequenz mit der zu erkennenden Befeuchtung zu erreichen, muss dafür gesorgt werden, dass die Wickelkapazität möglichst stark durch diese Größe, also durch die Feuchte, geändert wird. Dies kann in besonders vorteilhafter Weise durch Planarspulen realisiert werden, wie sie in Fig. 3 dargestellt sind. In anderen Ausführungsbeispielen kann der Leiter aber auch in konventioneller Wickeltechnik realisiert sein. Die zu verwendenden Formen sind nicht etwa auf die in Fig. 3 dargestellten geometrischen Formen beschränkt. Vielmehr ist eine große Vielfalt anderer Formen denkbar. Dem Fachmann ist bekannt, dass jede Leiteranordnung stets eine gewisse parasitäre Kapazität aufweist, die bei den entsprechenden Ausführungsbeispielen der erfindungsgemäßen Vorrichtungen zur Befeuchtungserkennung ausgenutzt wird. Sternförmige Anordnungen sind ebenfalls denkbar, genauso wie Anordnungen die sich an die Form einer äußeren Umrandung einer Kraftfahrzeug-Frontscheibe anpassen. Auf diese Weise kann zum Beispiel bei Einsatz eines entsprechenden Ausführungsbeispiels einer Vorrichtung zur Befeuchtungserkennung als Regensensor zur Steuerung von Scheibenwischern in einem Kraftfahrzeug der Messaufnehmer der Geometrie der Windschutzscheibe in vorteilhafter Weise angepasst werden, ohne für den Fahrzeugführer eine Sichtbehinderung darzustellen.

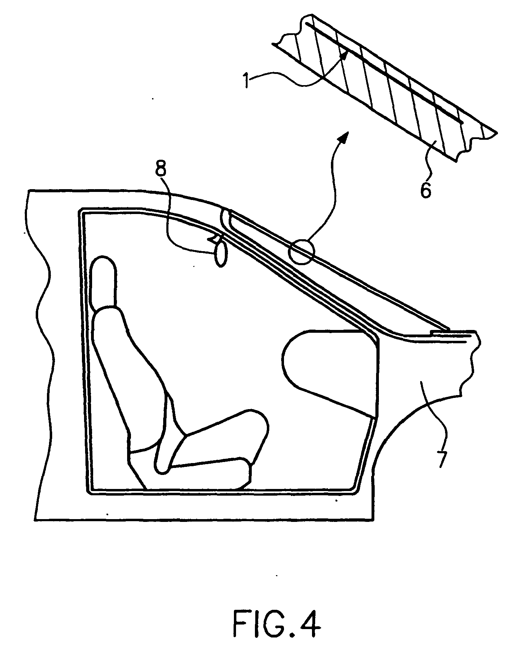

Bei bestimmten Ausführungsbeispielen erfindungsgemäßer Vorrichtungen zur Befeuchtungserkennung ist der Messaufnehmer in einen Träger integriert. Fig. 4 zeigt dies für die Integration eines nur aus einem Leiter bestehenden Messaufnehmers 1 in die Frontscheibe 6 eines Kraftfahrzeugs 7. Im Querschnitt der Scheibe 6 gesehen ist der Messaufnehmer 1 näher zur nach außen gewandten Frontfläche der Scheibe 6 hin angeordnet als zu der ins Fahrzeuginnere gewandten anderen Frontfläche der Scheibe 6. Die Integration des Messaufnehmers 1 sollte dabei vorteilhafterweise möglichst nahe an der Befeuchtung erfolgen. Je geringer der Abstand zur Scheibenoberfläche, desto größer die Änderung der Resonanzfrequenz $f_0$ des LC-Schwingkreises 1 mit dem Grad der Befeuchtung.

Bei dem in Fig. 4 dargestellten Ausführungsbeispiel einer erfindungsgemäßen Vorrichtung zur Befeuchtungserkennung ist der Oszillator 2 samt Durchstimmeinrichtung 3 in den Innenraumrückspiegel 8 des Kraftfahrzeugs 7 integriert.

Es handelt sich hierbei also um eine Ausführungsform einer erfindungsgemäßen Vorrichtung zur Befeuchtungserkennung, bei welcher der Messaufnehmer 1 und der Oszillator 2 berührungslos energetisch gekoppelt sind. Wie leicht einzusehen ist, liefert diese eine große Gestaltungsfreiheit bei der Anordnung der elektronischen Komponenten dieser Vorrichtung. So kann in weiteren Ausführungsbeispielen einer solchen erfindungsgemäßen Vorrichtung zur Befeuchtungserkennung der Oszillator 2 auch im Dach des Fahrzeugs 7 integriert sein.

Bei vielen Ausführungsbeispielen erfindungsgemäßer Vorrichtungen zur Befeuchtungserkennung liegt der Abstand zwischen dem Oszillator 2 und dem Messaufnehmer 1 im Bereich von 1cm bis 1m.

Bei der erfindungsgemäßen Vorrichtung zur Befeuchtungserkennung ist mindestens ein weiterer LC-Schwingkreis als weiterer Messaufnehmer vorgesehen. Häufig werden dabei der weitere Messaufnehmer beziehungsweise einer der weiteren Messaufnehmer zur Referenzmessung verwendet. Um z.B. bei Verwendung eines Ausführungsbeispiels einer erfindungsgemäßen Vorrichtung zur Befeuchtungserkennung eine Aussage über die Regenmenge zu bekommen, ist die Frequenzverwerfung gegenüber normaler Luft zu messen. Die Frequenzdifferenz zwischen Sensor-Messaufnahme und Referenz-Messaufnehmer gibt dann die zu bestimmende Regenmenge wieder. Bei der erfindungsgemäßen Vorrichtung zur Befeuchtungserkennung sind die einzelnen Schwingkreise so ausgelegt, dass sich ihre Eigenfrequenzen im Bereich von 0 Prozent bis 100 Prozent Feuchte nicht überschneiden.

Bei erfindungsgemäßen Vorrichtungen zur Befeuchtungserkennung mit mindestens einem weiteren LC-Schwingkreis als weiterem Messaufnehmer ist es bei verschiedenen Ausführungsbeispielen so, dass der erstgenannte Messaufnehmer 1 auf einer Seite eines Trägers, z. B. der genannten Frontscheibe 6 eines Kraftfahrzeugs, montiert ist, während der weitere Messaufnehmer auf der vom erstgenannten Messaufnehmer 1 abgewandten Seite des Trägers montiert ist. Entsprechend kann bei Integration der Messaufnehmer in den Träger verfahren werden, d. h., der eine Messaufnehmer 1 ist dann näher zu einer Frontfläche des Trägers hin angeordnet, während der weitere Messaufnehmer in dem Träger näher zu der von der erstgenannten Frontfläche abgewandten Frontfläche des Trägers integriert ist.

Neben der vorstehend schon detailliert beschriebenen Verwendung von Ausführungsbeispielen erfindungsgemäßer Vorrichtungen zur Befeuchtungserkennung als Regensensoren an Kraftfahrzeugen eignen sich andere Ausführungsbeispiele erfindungsgemäßer Vorrichtungen zur Befeuchtungserkennung insbesondere zur Verwendung zur Befeuchtungsdetektion in einem Ofen.

## Patentansprüche

1.  . Vorrichtung zur Befeuchtungserkennung mit

  - einem LG-Schwingkreis als Messaufnehmer (1),
  - einem Oszillator (2) zur Anregung des Schwingkreises (1),
  - einer Durchstimmeinrichtung (3) zur frequenzmäßigen Durchstimmung des Oszillators (2) und
  - einer Mess- und Auswerteschaltung (4) zur Erfassung des Bedämpfungszustandes des Oszillators (2) und zum Bereitstellen eines Signals, das proportional zum Befeuchtungsgrad des Messaufnehmers (1) ist, wobei
  - der Messaufnehmer (1) und der Oszillator (2) berührungslos energetisch gekoppelt sind,

  **gekennzeichnet durch**
  mindestens einen weiteren LC-Schwingkreis als weiteren Messaufnehmer, wobei die Schwingkreise so ausgelegt sind, dass sich ihre Eigenfrequenzen im Bereich von 0% bis 100% Feuchte nicht überschneiden.

2.  . Vorrichtung zur Befeuchtungserkennung mit

  - einem LC-Schwingkreis als Messaufnehmer (1),
  - einem Oszillator (2) zur Anregung des Schwingkreises (1),
  - einer Durchstimmeinrichtung (3) zur frequenzmäßigen Durchstimmung des Oszillators (2) und
  - einer Mess- und Auswerteschaltung (4) zur Erfassung des Bedärrlp-fungszustandes des Oszillators (2) und zum Bereitstellen eines Signals, das proportional zum Befeuchtungsgrad des Messaufnehmers (1) ist, wobei
  - der Messaufnehmer (1) nur aus einem Leiter besteht,

  **gekennzeichnet durch**
  - mindestens einen weiteren LC-Schwingkreis als weiteren Messaufnehmer, wobei die Schwingkreise so ausgelegt sind, dass sich ihre Eigenfrequenzen im Bereich von 0% bis 100% Feuchte nicht überschneiden.

3.  . Vorrichtung nach Anspruch 2, **dadurch gekennzeichnet, dass** der Messaufnehmer (1) und der Oszillator (2) galvanisch gekoppelt sind.

4.  . Vorrichtung nach Anspruch 1, **dadurch gekennzeichnet, dass** der Messaufnehmer (1) nur aus einem Leiter besteht.

5.  . Vorrichtung nach Anspruch 2 oder Anspruch 4, **dadurch gekennzeichnet, dass** der genannte Leiter in Planartechnik oder in Wickeltechnik realisiert ist

6.  . Vorrichtung nach einem der vorhergehenden Ansprüche, **dadurch gekennzeichnet, dass** der Messaufnehmer (1) in einen Träger integriert ist.

7.  . Vorrichtung nach Anspruch 6. **dadurch gekennzeichnet, dass** der Messaufnehmer (1) im Querschnitt des Trägers gesehen naher zu einer Frontfläche des Trägers hin angeordnet ist, als zu der anderen Frontfläche des Trägers.

**8.** . Vorrichtung nach einem der Ansprüche 1 bis 5, **dadurch gekennzeichnet, dass** der Messaufnehmer (1) an einen Träger montiert ist.

**9.** . Vorrichtung nach einem der Ansprüche 6 bis 8, **dadurch gekennzeichnet, dass** der Träger eine Fensterscheibe ist.

**10.** . Vorrichtung nach Anspruch 9, **dadurch gekennzeichnet, dass** die Fensterscheibe eine Scheibe (6) eines Fahrzeugs (7) ist.

**11.** , Vorrichtung nach Anspruch 1, **dadurch gekennzeichnet, dass** der weitere Messaufnehmer bzw. einer der weiteren Messaufnehmer zur Referenzmessung verwendet wird.

**12.** . Vorrichtung nach Anspruch 6, **dadurch gekennzeichnet, dass** der weitere Messaufnehmer auf der vom erstgenannten Messaufnehmer (1) abgewandten Seite des Trägers montiert ist oder in dem Träger näher zu der von der erstgenannten Frontfläche abgewandten Frontfläche des Trägers integriert ist

**13.** . Vorrichtung nach Anspruch 10, **dadurch gekennzeichnet, dass** der Oszillator (2) in einen Spiegel (8) eines Fahrzeugs (7) oder ins Dach des Fahrzeugs (7) integriert ist

**14.** . Vorrichtung nach Anspruch 1, **dadurch gekennzeichnet, dass** der Abstand zwischen Oszillator (2) und Messaufnehmer (1) im Bereich von 1 cm bis 1 m liegt.

**15.** . Verwendung einer Vorrichtung nach einem der Ansprüche 1 bis 14 zur Befeuchtungsdetektion als Regensensor in einem Kraftfahrzeug.

**Claims**

**1.** A device for determining moisture, said device including

    - an LC-oscillating circuit as a transducer (1);
    - an oscillator (2) for exciting the oscillating circuit (1);
    - a tuning device (3) for frequency-wise tuning of the oscillator (2); and
    - a measuring and evaluation circuit (4) for receiving the damping condition of the oscillator (2) and for providing a signal that is proportional to the degree of moisture of the transducer (1), wherein
    - the transducer (1) and the oscillator (2) are coupled by a contact-free energy coupling,

**characterized by**

at least one additional LC-oscillating circuit as a further transducer, wherein the oscillating circuits are configured such that their natural frequencies do not cross in a range of from 0% to 100% moisture.

**2.** A device for determining moisture, said device including

    - an LC-oscillating circuit as a transducer (1);
    - an oscillator (2) for exciting the oscillating circuit (1);
    - a tuning device (3) for frequency-wise tuning of the oscillator (2); and
    - a measuring and evaluation circuit (4) for receiving the damping condition of the oscillator (2) and for providing a signal that is proportional to the degree of moisture of the transducer (1), wherein
    - the transducer (1) is formed of a single conductive lead,
    **characterized by**
    - at least one additional LC-oscillating circuit as a further transducer, wherein the oscillating circuits are configured such that their natural frequencies do not cross in a range of from 0% to 100% moisture.

**3.** The device of claim 2, **characterized in that** the transducer (1) and the oscillator (2) have a galvanic coupling.

**4.** The device of claim 1, **characterized in that** the transducer (1) is formed of a single conductive lead.

**5.** The device of claim 2 or claim 4, **characterized in that** the said lead is realized in planar technique or coiled technique.

**6.** The device of one of the preceding claims, **characterized in that** the transducer (1) is integrated into a support.

**7.** The device of claim 6, **characterized in that** the transducer (1), as seen in a cross section of the support, is arranged closer to one front surface of the support than to the other front surface of the support.

**8.** The device of one of claims 1 to 5, **characterized in that** the transducer (1) is mounted on a support.

**9.** The device of one of claims 6 to 8, **characterized in that** the support is a window pane.

**10.** The device of claim 9, **characterized in that** the window pane is a pane (6) of a motor vehicle (7).

**11.** The device of claim 1, **characterized in that** the further transducer or one of the further transducers is used for taking a reference measurement.

**12.** The device of claim 6, **characterized in that** the further transducer is mounted on the side of the support facing away from the first-mentioned transducer (1) or is integrated in the support closer to the front surface of the support facing away from the first-mentioned front surface.

**13.** The device of claim 10, **characterized in that** the oscillator (2) is integrated into one of a mirror (2) and a roof of the motor vehicle (7).

**14.** The device of claim 1, **characterized in that** a spacing between the oscillator (2) and the transducer (1) is in a range of from 1 cm to 1 m.

**15.** Use of a device of one of claims 1 to 14 for moisture detection as a rain sensor in a motor vehicle.

**Revendications**

**1.** Dispositif de détection d'humidité, comprenant

- un circuit oscillant LC comme capteur de mesure (1),
- un oscillateur (2) pour exciter le circuit oscillant (1),
- un dispositif de variation de fréquence (3) pour faire varier la fréquence de l'oscillateur (2), et
- un circuit de mesure et d'évaluation (4) pour relever l'état d'affaiblissement de l'oscillateur (2) et pour fournir un signal qui est proportionnel au degré d'humidité du capteur de mesure (1),
- le capteur de mesure (1) et l'oscillateur (2) étant couplés énergétiquement sans contact,

**caractérisé par** au moins un autre circuit oscillant LC comme autre capteur de mesure, les circuits oscillants étant conçus de telle sorte que leurs fréquences propres ne se coupent pas dans la zone de 0% à 100% d'humidité.

**2.** Dispositif de détection d'humidité, comprenant

- un circuit oscillant LC comme capteur de mesure (1),
- un oscillateur (2) pour exciter le circuit oscillant (1),
- un dispositif de variation de fréquence (3) pour faire varier la fréquence de l'oscillateur (2), et
- un circuit de mesure et d'évaluation (4) pour relever l'état d'affaiblissement de l'oscillateur (2) et pour fournir un signal qui est proportionnel au degré d'humidité du capteur de mesure (1),
- le capteur de mesure (1) se composant seulement d'un conducteur,

**caractérisé par** au moins un autre circuit oscillant LC comme autre capteur de mesure, les circuits oscillants étant conçus de telle sorte que leurs fréquences propres ne se coupent pas dans la zone de 0% à 100% d'humidité.

**3.** Dispositif selon la revendication 2, **caractérisé en ce que** le capteur de mesure (1) et l'oscillateur (2) sont couplés galvaniquement.

**4.** Dispositif selon la revendication 1, **caractérisé en ce que** le capteur de mesure (1) se compose seulement d'un conducteur.

**5.** Dispositif selon la revendication 2 ou 4, **caractérisé en ce que** le conducteur est réalisé suivant la technique planar ou suivant la technique enroulée.

**6.** Dispositif selon l'une des revendications précédentes, **caractérisé en ce que** le capteur de mesure (1) est intégré dans un support.

**7.** Dispositif selon la revendication 6, **caractérisé en ce que** le capteur de mesure (1), si on considère la coupe transversale du support, est disposé plus près d'une surface frontale du support que de l'autre surface frontale du support.

**8.** Dispositif selon l'une des revendications 1 à 5, **caractérisé en ce que** le capteur de mesure (1) est monté sur un support.

**9.** Dispositif selon l'une des revendications 6 à 8, **caractérisé en ce que** le support est constitué par une vitre.

**10.** Dispositif selon la revendication 9, **caractérisé en ce que** la vitre est constituée par une vitre (6) d'un véhicule (7).

**11.** Dispositif selon la revendication 1, **caractérisé en ce que** l'autre capteur de mesure ou l'un des autres capteurs de mesure sert à la mesure de référence.

**12.** Dispositif selon la revendication 6, **caractérisé en ce que** l'autre capteur de mesure est monté sur le côté du support qui est opposé au premier capteur de mesure (1) ou est intégré dans le support plus près de la surface frontale de celui-ci qui est opposée à la première surface frontale.

**13.** Dispositif selon la revendication 10, **caractérisé en ce que** l'oscillateur (2) est intégré dans un rétroviseur (8) d'un véhicule (7) ou dans le toit du véhicule (7).

**14.** Dispositif selon la revendication 1, **caractérisé en ce que** la distance entre l'oscillateur (2) et le capteur de mesure (1) est située dans la plage de 1 cm à 1 m.

**15.** Utilisation d'un dispositif selon l'une des revendications 1 à 14 pour la détection d'humidité comme capteur de pluie dans un véhicule automobile.

FIG.1

Oszillator

C L

MC o5

FIG.2

U

f₀ f

FIG.3

C_Spule L

FIG.4